Europäisches Patentamt

European Patent Office

Office européen des brevets

(11) Veröffentlichungsnummer: **0 361 153**
**A2**

(12) ## EUROPÄISCHE PATENTANMELDUNG

(21) Anmeldenummer: **89116456.8**

(51) Int. Cl.5: **G02B 6/30 , G02B 6/42**

(22) Anmeldetag: **06.09.89**

(30) Priorität: **29.09.88 DE 3833147**

(43) Veröffentlichungstag der Anmeldung:
**04.04.90 Patentblatt 90/14**

(84) Benannte Vertragsstaaten:
**DE FR GB IT NL SE**

(71) Anmelder: **Siemens Aktiengesellschaft
Wittelsbacherplatz 2
D-8000 München 2(DE)**

(72) Erfinder: **Matz, Richard, Dr.
Naringerstrasse 24a
D-8152 Westerham(DE)**
Erfinder: **Winzer, Gerhard, Dr.
Zugspitzstrasse 10
D-8011 Putzbrunn(DE)**

(54) **Anordnung zum Koppeln einer optischen Faser an ein Koppelfenster eines planar integriert optischen Bauteils und Verfahren zur Herstellung einer solchen Anordnung.**

(57) Die Ankopplung von Fasern an Koppelfenster planar integrierter optischer Bauteile erfolgt durch optische Koppeloptiken, die Platz und Montageaufwand benötigen. Es wird eine kompakte, leicht montierbare Anordnung zum Koppeln einer optischen Faser an ein Koppelfenster eines planar integrierten optischen Bauteils, insbesondere eines planar integrierten Wellenleiters, angegeben, die direkt auf dem Substrat ausgebildet werden kann, auf dem das Bauteil integriert ist.

Die Anordnung weist eine auf der Oberfläche (O) des Substrats (Sub) ausgebildete Nut (FK) mit einem abgeschlossenen Ende (aE) auf, in der das Koppelfenster (KF) angeordnet ist. In der Nut (FK) ist ein Endabschnitt (FE) einer Faser befestigt, wobei das Ende (FE) des Endabschnitts dem Koppelfenster (KF) gegenüberliegt, so daß durch das Faserende (FE) und das Koppelfenster (KF) eine optische Welle direkt zwischen der Faser und dem Bauteil (WL) überkoppeln kann.

Anwendung für Komponenten der integrierten Optik, insbesondere integrierten Wellenleitern

FIG 4

## Anordnung zum Koppeln einer optischen Faser an ein Koppelfenster eines planar integriert optischen Bauteils und Verfahren zur Herstellung einer solchen Anordnung

Die Erfindung betrifft eine Anordnung zum Koppeln einer optischen Faser an ein Koppelfenster eines planar integriert optischen Bauteils nach dem Oberbegriff des Patentanspruchs 1 und ein Verfahren zur Herstellung einer solchen Anordnung.

Die Eigenschaften einer faseroptischen Signalübertragungsstrecke werden mitbestimmt durch die Qualität der optischen Ankopplung der Glasfaser an Sende- und Empfangsmodule. Da die in der Faser geführte Lichtwelle in der Regel eine laterale Modenausdehnung im μm-Bereich aufweist, ist eine entsprechend genaue Justierung der Elemente relativ zueinander erforderlich. Bei einmodigen, integrierten Wellenleitern auf III-IV-Halbleitern können die zulässigen lateralen Justiertoleranzen wegen der Kürze der Lichtwellenlänge im Material auch auf weit unter 1 μm schrumpfen.

Bisherige Anordnungen der verlustarmen Kopplung sind meist abgestimmt auf die Anforderungen hybrid aufgebauter Module. Faser und anzukoppelndes optisches Bauteil sind auf je einem Subträger montiert, und zwar zusammen mit einer jeweils zur Modenanpassung erforderlichen Koppeloptik. Sie kann aus einem Fasertaper mit angeschlossener Linse bestehen (siehe Siemens Forschungs- und Entwicklungsbericht, Bd. 13, (1984) S. 284-288) oder aus einer Kugel- bzw. Gradientenlinse (siehe dazu Siemens Forschungs- und Entwicklungsberichte, Bd. 16 (1987) S. 141-146). Die hierdurch definierten Subeinheiten werden dann unmittelbar beim Justieren auf dem Hauptträger relativ zueinander fest verlötet. Die Möglichkeit, bei diesem Verfahren zunächst die Subeinheiten separat zu prüfen und bei der Montage nachzujustieren, kann von Vorteil sein, muß aber mit Platzbedarf pro Koppelstelle und Montageaufwand bezahlt werden.

Aufgabe der Erfindung ist es, eine kompakte, leicht montierbare Anordnung zum Koppeln einer optischen Faser an ein Koppelfenster eines planar integrierten Bauteil, insbesondere eines planar integrierten Wellenleiters anzugeben, die direkt auf dem Substrat ausgebildet werden kann, auf dem das optische Bauteil integriert ist.

Diese Aufgabe wird ausgehend von einer Anordnung der eingangs genannten Art durch die im kennzeichnenden Teil des Patentanspruchs 1 angegebenen Merkmale gelöst.

Der erfindungsgemäße Führungskanal stellt eine durch monolithische Integration herstellbare Trägerstruktur für die Glasfaser dar, durch welche die Möglichkeit besteht, bei geringem Platz- und Justierbedarf die Glasfaser planar an das planar integrierte optische Bauteil auf dem Substrat anzukoppeln.

Vorzugsweise hat die Nut gemäß Anspruch 2 einen V-förmigen Querschnitt.

Ein besonders vorteilhaftes Verfahren zur Herstellung einer Anordnung nach Anspruch 2 ist im Anspruch 3 angegeben.

Es sei darauf hingewiesen, daß aus Optics Lett. Vol. 11, No. 2, Febr. 1986, S. 109-111 eine Anordnung zum Koppeln einer optischen Faser an ein Koppelfenster zum Einkoppeln einer optischen Welle in eine auf einem Substrat integrierte Photodiode eines höchstintegrierten elektrischen Schaltkreises bekannt ist, bei der die Faser in einem im Substrat ausgebildeten Sackloch angeordnet ist, das senkrecht zur Substratoberfläche ausgerichtet ist. Das Koppelfenster der Photodiode befindet sich am Boden des Sacklochs. Aufgrund der vertikalen Verbindung der Faser mit der Substratoberfläche erlaubt diese Lösung eine hohe Packungsdichte an jeder beliebigen Stelle der Substratoberfläche, doch erscheint sie wegen dieser vertikalen Anordnung für eine Auskopplung einer Faser an planare Strukturen der integrierten Optik, beispielsweise an planar integriert optische Wellenleiter, als nicht geeignet.

Die Erfindung wird anhand der Figuren in der nachfolgenden Beschreibung eines bevorzugten Ausführungsbeispiels näher erläutert. Von den Figuren zeigen:

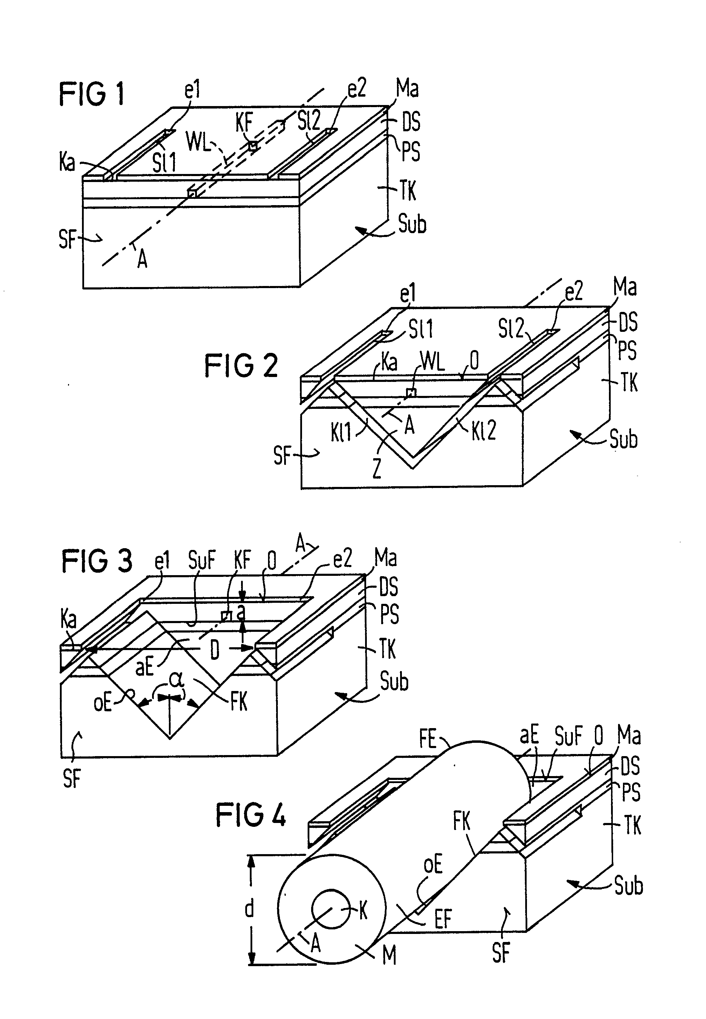

Figur 1 ein Substrat mit einem planar integrierten Wellenleiter und einer auf der Oberfläche des Substrats aufgebrachten Ätzmaske mit zwei parallel zu dem Wellenleiter verlaufenden Schlitzen, die sich von einer Seitenkante des Substrats bis zumindest in Höhe eines für den Wellenleiter vorgesehenen Koppelfensters erstrecken und die als Ausgangsstufe für das Verfahren zur Herstellung einer beispielhaften Vorrichtung dienen,

Figur 2 die Vorrichtung nach Figur 1 nach dem Ätzen von schlitzförmigen Kanälen, die ausgehend von den Schlitzen der Ätzmaske schräg in die Tiefe des Substrats bis zum Aufeinandertreffen unter dem Koppelfenster führen und zwischen denen eine freitragende Zunge ausgebildet ist, die einen von der Seitenkante des Substrats bis mindestens zum Koppelfenster sich erstreckenden Teil des Wellenleiters enthält,

Figur 3 das Substrat nach Figur 2 nach Entfernen der freitragenden Zunge bis zum vorgesehenen Koppelfenster, wobei in der Oberfläche des Substrats eine Nut mit V-förmigem Profil ausgebildet ist, die ein offenes Ende und ein durch eine dreieckförmige Fläche des Substrats abgeschlossenes Ende aufweist, in der das Koppelfenster ausgebildet ist. und

Figur 4 die fertige beispielhafte Anordnung nach Befestigen eines Endabschnitts einer Faser in der Nut so, daß eine Endfläche dieses Endabschnitts, genauer eines Kerns dieses Endabschnitts, gegenüber dem Koppelfenster angeordnet ist und dadurch eine optische Welle zwischen der Faser und dem Wellenleiter überkoppeln kann.

In der in Figur 1 dargestellten Ausgangsstufe für das Verfahren zur Herstellung der beispielhaften Anordnung besteht das den planar integrierten Wellenleiter WL tragende Substrat Sub, beispielsweise aus einem Trägerkörper TK aus InP, auf den epitaktisch eine Pufferschicht PS aus InP und darauf eine Deckschicht DS aus InP aufgebracht sind und bei dem der Wellenleiter WL aus einem auf der Pufferschicht PS epitaktisch aufgebrachten, von der Deckschicht umgebenen und von einer mit der Oberfläche O des Substrats eine Seitenkante Ka definierenden Seitenfläche SF des Substrats Sub entlang einer Längsachse A sich in das Innere des Substrats Sub erstreckenden Streifen aus quaternärem Material, beispielsweise InGaAsP-Material besteht. Der Wellenleiter kann beispielsweise die wellenleitende, lichtverstärkende Schicht einer Laserdiode sein.

Auf die Deckschicht DS ist eine Ätzmaske Ma aufgebracht, in der zwei zu beiden Seiten des planaren Wellenleiters WL angeordnete, parallel zur Längsachse A dieses Wellenleiters WL verlaufende und sich zumindest von der Seitenkante Ka des Substrats bis in Höhe des Koppelfensters KF sich erstreckende längliche Schlitze S11 und S12 ausgespart sind, in denen die Oberfläche O des Substrat freiliegt. Die Höhe der Koppelfläche KF entspricht dem in Richtung der Achse A gemessenen Abstand des Koppelfensters KF von der Seitenkante Ka des Substrats Sub.

Die Schlitze S11 und S12 können in einem bekannten photolithographischen Prozeß hergestellt werden.

Ausgehend von den Schlitzen S11 und S12 werden schräg in die Tiefe aufeinander zu Schlitzförmige Kanäle K11 und K12 in das Substrat geätzt, bis sie in der Tiefe des Substrats Sub unter dem Wellenleiter WL aufeinandertreffen oder sich kreuzen (Figur 2). Diese schlitzförmgien Kanäle K11 und K12 liegen in zwei sich kreuzenden Ebenen, wobei die nicht dargestellte und im Substrat verlaufende Schnittlinie unter dem Wellenleiter WL und parallel zur Achse A des Wellenleiters WL verläuft.

Zwischen den beiden schlitzförmigen Kanälen K11 und K12 befindet sich eine freitragende Zunge Z mit dreieckförmigem Querschnitt, die sich von der Seitenkante Ka des Substrats Sub in Richtung der Achse A des Wellenleiters WL bis zu den Enden e1 und e2 der Schlitze S11 bzs. S12 der Maske Ma erstreckt.

Als Ätzverfahren kann laserinduzierte Naßätzen verwendet werden (siehe dazu beispielsweise Appl. Phys. Lett. 46 (1985) S. 453-455).

Die Zunge Z wird bis zum Koppelfenster KF entfernt (Figur 3). Dies kann durch Abspalten der frei tragenden Zunge in einem Ultraschallbad erfolgen.

Nach dem Entfernen der freitragenden Zunge Z entsteht eine in Richtung der Achse A des Wellenleiters WL verlaufende Nut FK an der Oberfläche O des Substrats Sub mit dreieckförmigem Querschnitt, die an der Seitenkante Ka des Substrats Sub ein offenes Ende oE und ein durch eine im wesentlichen vertikal zur Längsachse A stehende, dreieckförmige Substratfläche SuF abgeschlossenes Ende aE aufweist, in welcher das Koppelfenster KF in Form eines gegenüber der Seitenfläche SF des Substrats zurückversetzten, freigelegten Endes des Wellenleiters WL angeordnet ist.

Die Lage des Koppelfensters KF braucht durch die Enden e1 und e2 der Schlitze S11 und S12 der Ätzmaske Ma nur in etwa festgelegt werden und ist unkritisch. In der Praxis wird das Koppelfenster KF etwas näher an der Seitenkante Ka des Substrats Sub liegen als die genannten Enden e1 und e2.

In der Nut FK kann bei geeigneter Dimensionierung ein Endabschnitt EF einer Glasfaser, beispielsweise einer Kern-Mantel-Glasfaser mit einem Kern K und einem Mantel M so befestigt werden, daß das Ende FE dieses Endabschnitts EF, genauer des Kerns dieses Endabschnitts, gegenüber dem Koppelfenster KF des Wellenleiters WL liegt und der Endabschnitt EF und der Wellenleiter WL fluchten (Figur 4).

Zur besseren Modenanpassung kann das Ende FE des Endabschnitts EF als Taper mit angeschlossener Linse ausgebildet sein.

Bei einer Flankenneigung $\alpha = 45°$ der Nut FK und einem äußeren Manteldurchmesser d der Faser muß die Breite D der Nut an der Oberfläche O des Substrats Sub gleich $D = \sqrt{2}.d + 2a$ sein, damit die Achse des zur Längsachse A konzentrisch angenommenen Faserkerns K im Abstand a unter der Oberfläche O des Substrats Sub den integrierten Wellenleiter WL trifft.

Bei mehreren anzukoppelnden Fasern erlaubt der geringe Platzbedarf minimalen lateralen Abstand der einzelnen Koppelfenster oder -stellen voneinander. Das Verfahren ist geeignet für Anwendungen, bei denen die photolithographisch und ätztechnisch erreichbaren Toleranzen ausreichen, um die Faser mit nur geringer oder sogar ohne Justage innerhalb der Nut mit V-förmigem Querschnitt relativ zum Koppelfenster bzw. zur Koppelstelle hinreichend genau zu positionieren.

Bei einem Ausführungsbeispiel wurde eine

etwa 50 μm breite Zunge Z durch laserinduziertes Naßätzen erzeugt, wobei als Ätzmaske eine aufgedampfte Titanschicht verwendet wurde.

Die Nuten zum Befestigen der Faserendabschnitte müssen nicht an einem Ende offen sein. Sie können an jeder beliebigen Stelle der Oberfläche des Substrats hergestellt werden und an beiden Enden durch Substratflächen abgeschlossen sein. Die Ankopplung einer parallel an die Oberfläche des Substrats herangeführten Faser ist in diesem Falle möglich, wenn die Länge der Nut ausreicht, um die Faser durch Krümmung an einem abgeschlossenen Ende der Nut aus der Oberfläche des Substrast herauszuführen.

**Ansprüche**

1. Anordnung zum Koppeln einer optischen Faser an ein Koppelfenster (KF) zum Ein- oder und Auskoppeln einer optischen Welle aus oder und in ein auf einem Substrat (Sub) planar integriertes optisches Bauteil (WL), insbesondere eines planar integrierten optischen Wellenleiters, **gekennzeichnet durch** eine auf der Oberfläche (O) des Substrats (Sub) ausgebildete Nut (FK) mit einem wenigstens durch eine Substratfläche (SuF) abgeschlossenen Ende (aE), wobei in diesem abgeschlossenen Ende (aE) das Koppelfenster (KF) des optischen Bauteils (WL) und in der Nut (FK) ein Endabschnitt (EF) der Faser mit einem dem Koppelfenster (KF) gegenüberliegenden Faserende (FE) angeordnet ist, so daß durch das Faserende (FE) und das Koppelfenster (KF) die optische Welle direkt zwischen der Faser und dem Bauteil (WL) überkoppeln kann.

2. Anordnung nach Anspruch 1, **gekennzeichnet** durch eine Nut (FK) mit V-förmigem Querschnitt.

3. Verfahren zur Herstellung einer Anordnung nach Anspruch 2, **dadurch gekennzeichnet,** daß in die Oberfläche (O) des Substrats (Sub) zwei sich der Länge nach bis mindestens in Höhe des Koppelfensters (KF) sich erstreckende, schlitzförmige Kanäle (K11, K12) von der Oberfläche (O) schräg aufeinander zu in die Tiefe des Substrats (Sub) geätzt werden, bis sie unter dem Wellenleiter (WL) aufeinandertreffen oder sich kreuzen, daß eine dabei entstehende und durch die schrägen Kanäle (K11, K12) beidseitig vom Substrat (Sub) getrennte und zumindest in der Nähe des vorgesehenen Koppelfensters (KF) mit dem Substrat (Sub) verbundene Brücke oder Zugen (Z) bis in Höhe des vorgesehenen Koppelfensters (KF) entfernt und dadurch die Nut (FK) und dieses Fenster (KF) freigelegt werden und daß in der nach Entfernen der Brücke oder Zunge (Z) entstandenen freiliegenden, im Profil V-förmigen Nut (FK) mit V-förmigem Querschnitt der Endabschnitt (EF) der Faser befestigt wird.

FIG 1

FIG 2

FIG 3

FIG 4